# EUROPÄISCHE PATENTSCHRIFT

(11) **EP 3 090 164 B1**
(45) Veröffentlichungstag und Bekanntmachung des Hinweises auf die Patenterteilung: **07.03.2018**
(21) Anmeldenummer: 14812134.6
(22) Anmeldetag: 10.12.2014
(51) Int. Cl.: F02D 19/06, F02D 19/10, F02M 43/04, F02M 47/04, F02M 21/02

(54) **DUAL-FUEL-KRAFTSTOFFINJEKTOR**
DUAL-FUEL FUEL INJECTOR
INJECTEUR BICARBURANT

(30) Priorität: 30.12.2013 DE 102013022260
(43) Veröffentlichungstag der Anmeldung: 09.11.2016
(73) Patentinhaber: L'Orange GmbH, 70435 Stuttgart (DE)
(72) Erfinder: KALENBORN, Markus, 89160 Dornstadt (DE)
(74) Vertreter: Schimek, Wolfgang Stefan
(86) Internationale Anmeldenummer: PCT/EP2014/003303
(87) Internationale Veröffentlichungsnummer: WO 2015/101406

(56) Entgegenhaltungen:
- EP-A1- 0 575 887
- EP-A1- 0 778 410
- DE-A1- 3 540 780

## Beschreibung

Die vorliegende Erfindung betrifft einen Dual-Fuel-Kraftstoffinjektor gemäß dem Oberbegriff von Anspruch 1.

Aus der Druckschrift DE 35 01 236 C1 ist ein Zylinderdeckel für eine Kolbenbrennkraftmaschine bekannt, wobei der Zylinderdeckel eine Einspritzdüse im Zentrum und wenigstens zwei periphere Einspritzdüsen aufweist. Die EP 0 778 410 A1 beschreibt einen Dual-Fuel-Kraftstoffinjektor gemäss dem Oberbegriff des Anspruchs 1, Gasförmige Kraftstoffe gewinnen im Großmotorensektor, insbesondere bei Stationärmotoren zur Stromerzeugung, zunehmend an Bedeutung. Erdgas eignet sich wegen seiner sehr guten Verfügbarkeit sowie seines günstigeren Emissionspotentials gegenüber Dieselkraftstoff hervorragend für einen wirtschaftlichen und umweltschonenden Motorbetrieb. Die meisten Gasmotoren arbeiten nach dem Ottoverfahren, d.h. mit homogener Verbrennung und Fremdzündung, wobei die Zündung entweder von einer Zündkerze oder einem Dieselzündstrahlinjektor initiiert werden kann. Das ottomotorische Verfahren hat jedoch den Nachteil, dass während des Ladungswechsels, durch die äußere Gemischbildung bedingt, ein unerwünschter Methanschlupf entsteht. Methanschlupf kann allerdings nur verhindert werden, wenn im Motor ein Brennverfahren mit innerer Gemischbildung zur Anwendung kommt. Hierzu ist eine direkte Hochdruckeinspritzung erforderlich.

Dual-Fuel-Düsen, insbesondere solche, bei welchen die Gasventil- und Kraftstoffnadeln im selben Düsenkörper untergebracht werden, sind sehr aufwändig in der Fertigung. Die Nadeln sind z.B. konzentrisch ineinander geschachtelt im Düsenkörper angeordnet, s. z.B. die Druckschrift EP 1 274 933 B4, oder voneinander getrennt im Düsenkörper untergebracht, z.B. liegt die Kraftstoffnadel zentrisch und weitere Gasnadeln sind außermittig im Düsenkörper angeordnet, um den vollen Brennraumbereich von 360° abzudecken.

Ungeachtet der jeweiligen Variante ist die Bauraumsituation im Düsenkörper stets äußerst beengt und damit für eine Fertigung der Düse im Hinblick auf den zu betreibenden Aufwand für die Herstellung nachteilig. Dies gilt insbesondere, wenn die Gasabsperrorgane (Gasnadeln) brennraumnah an den Düsenlöchern sitzen sollen, da andernfalls ein erheblicher Anteil Gas nach der Verbrennung noch nach- bzw. ausströmen und die Kohlenwasserstoffemission in nachteiliger Weise beeinflussen kann.

Ausgehend hiervon ist es Aufgabe der vorliegenden Erfindung, einen verbesserten Dual-Fuel-Kraftstoffinjektor vorzuschlagen, welcher die Bauraumsituation bei insbesondere vorteilhaft einfacher Fertigbarkeit zu entschärfen hilft.

Diese Aufgabe wird durch einen Dual-Fuel-Kraftstoffinjektor mit den Merkmalen des Anspruchs 1 gelöst.

Vorteilhafte Weiterbildungen und Ausführungsformen der Erfindung sind in den weiteren Ansprüchen angegeben.

Vorgeschlagen wird erfindungsgemäß ein Dual-Fuel-Kraftstoffinjektor (Zweistoff-Injektor), insbesondere zur Verwendung mit einem ersten, flüssigen Kraftstoff wie etwa Dieselkraftstoff, Schweröl, Bioöl, und einem zweiten, gasförmigen Kraftstoff bzw. Brenngas, z.B. Erdgas, Methan, Biogas.

Der Dual-Fuel-Kraftstoffinjektor ist für eine Kraftstoffeinspritzeinrichtung einer Brennkraftmaschine vorgesehen, insbesondere z.B. für ein Gas-Common-Rail-System. Allgemein ist der Kraftstoffinjektor bevorzugt zur Verwendung mit einer Brennkraftmaschine in Form eines Gasmotors, insbesondere auf Basis eines Otto- oder Dieselmotors (mit innerer Gemischbildung), weiterhin insbesondere mit einem Großmotor vorgesehen und weiterhin insbesondere auch für stationäre Anwendungen, zum Beispiel Blockheizkraftwerke oder Industrieanwendungen.

Mittels des vorgeschlagenen Dual-Fuel-Kraftstoffinjektors kann sowohl ein reiner Flüssigkraftstoffbetrieb als auch ein kombinierter Flüssigkraftstoff-/Gasbetrieb mit beliebigem Gas-/ Flüssigkraftstoffanteil realisiert werden, insbesondere im Zündstrahlverfahren (mit Hochdruckgaseinspritzung).

Der erfindungsgemäß vorgeschlagene Dual-Fuel-Kraftstoffinjektor weist eine erste axial hubsteuerbare Düsennadel für das Ausbringen von Flüssigkraftstoff über eine erste

Düsenanordnung des Dual-Fuel-Kraftstoffinjektors auf. Der Dual-Fuel-Kraftstoffinjektor ist hierbei bevorzugt zur indirekten (hydraulischen) Steuerung der ersten Düsennadel eingerichtet, alternativ kann jedoch auch vorgesehen sein, die erste Düsennadel direkt zu steuern. Die erste Düsennadel ist bevorzugt in einem Düsenkörper des Kraftstoffinjektors aufgenommen.

Der Dual-Fuel-Kraftstoffinjektor weist weiterhin eine Mehrzahl von um die erste Düsennadel herum angeordneten axial hubsteuerbaren zweiten Düsennadeln für das Ausbringen von gasförmigem Kraftstoff über eine zweite Düsenanordnung des Dual-Fuel-Kraftstoffinjektors auf zum Beispiel zwei, drei, vier, fünf oder mehr zweite Düsennadeln. Vorgesehen ist insbesondere eine Anordnung mit zentraler erster Düsennadel und dazu außermittig angeordneten zweiten Düsennadeln, bevorzugt konzentrisch zu der ersten Düsennadel. Wie die erste Düsennadel sind bevorzugt auch die zweiten Düsennadeln im Düsenkörper aufgenommen. Im Rahmen der zweiten Düsenanordnung sind jeder der zweiten Düsennadeln z.B. ein oder mehrere über dieselbe freigebbare Gas-Einspritzdüsenöffnungen am Injektor zugeordnet (Spritzlöcher).

Erfindungsgemäß ist weiterhin für jede der zweiten Düsennadeln zu deren - indirekten - Hubsteuerung je ein (eigener) Steuerraum am Dual-Fuel-Kraftstoffinjektor zur Beaufschlagung - Belastung und Entlastung - mit einem (druckbeaufschlagten bzw. hochdruckbeaufschlagten) Steuerfluid, bevorzugt in Form von Flüssigkraftstoff, bereitgestellt bzw. gebildet. Vorgesehen ist hierbei insbesondere, die Steuerräume der zweiten Düsennadeln ebenfalls im Düsenkörper auszubilden.

Der erfindungsgemäße Dual-Fuel-Kraftstoffinjektor weist weiterhin - in kennzeichnender Weise
- einen Ringkanal auf, welcher via das Steuerfluid, insbesondere selektiv, be- und entlastbar ist bzw. mit dem Steuerfluid beaufschlagbar ist. Hierbei ist der Dual-Fuel-Kraftstoffinjektor eingerichtet, die Steuerräume für die zweiten Düsennadeln für die Steuerung des Hubs der zweiten Düsennadeln ausgehend von dem bzw. über den Ringkanal via das Steuerfluid - selektiv
- zu belasten und zu entlasten (d.h. korrespondierend mit dem Steuerfluid-Druckniveau im Ringkanal). Die Steuerräume für die zweiten Düsennadeln sind hierfür insbesondere je kommunizierend an den Ringkanal angebunden.

Der vorgeschlagene Dual-Fuel-Kraftstoffinjektor ermöglicht eine Fertigung mit baulich deutlich verringertem Aufwand für die Steuerung der zweiten Düsennadeln, wobei auch die Bauraumsituation gegenüber herkömmlichen Dual-Fuel-Injektoren komfortabler ist. Zum Beispiel können neben den Gasnadeln nunmehr auch das Pilotventil (ohne Aktuatorik) für die Steuerung im Düsenkörper untergebracht werden. Weiterhin ermöglicht der erfindungsgemäße Dual-Fuel-Kraftstoffinjektor die Einstellung eines Steuerdruckniveaus in den Steuerräumen der zweiten Düsennadeln, insbesondere mittelbar und weiterhin insbesondere bevorzugt einheitlich, auf vorteilhaft einfache Weise über den Ringkanal bzw. dessen Steuerfluid-Druckniveau (d.h. der Ringkanal wirkt als Vorsteuerraum für die Mehrzahl der Steuerräume der zweiten Düsennadeln).

Um die zweiten Düsennadeln zu deren Hubsteuerung mit einem beabsichtigten SteuerDruckniveau zu beaufschlagen, ist der Dual-Fuel-Kraftstoffinjektor insbesondere eingerichtet, ein vorbestimmtes Steuerfluid-Druckniveau im Ringkanal einstellen zu können, d.h. in Abhängigkeit der aktuellen Betriebs- bzw. Einspritzsituation. Hierzu weist der Ringkanal bevorzugt wenigstens einen Steuerfluid-Zulauf und wenigstens einen Steuerfluid-Ablauf auf, mithin kann - wiederum Bauraum sparend und unaufwändig zu fertigen - eine geringe Anzahl von Strömungswegen zur Einstellung des Druckniveaus im Ringkanal ausreichen.

Bevorzugte Ausführungsformen sehen vor, den Ringkanal für die Druckniveau-Einstellung selektiv entlasten zu können, insbesondere hierzu den Steuerfluid-Ablauf selektiv offensteuern zu können, d.h. hin zur Niederdruckseite des Kraftstoffinjektors. Hierzu weist der Dual-Fuel-Kraftstoffinjektor bevorzugt ein Pilotventil auf, insbesondere ein 2/2-Wege-Ventil oder ein 3/2-Wege-Ventil. Alternativ oder zusätzlich kann vorgesehen sein, in ähnlicher Weise den Steuerfluid-Zulauf (ausgehend von einer Hochdruckseite am Injektor) zum Ringkanal selektiv offensteuern zu können. In Zulauf- und/oder Ablauf ist bevorzugt je eine Drosselvorrichtung angeordnet.

Weitere Vorteile im Hinblick auf die Verbesserung der beengten Bauraumsituation am Düsenkörper und auf die beabsichtigte Anordnung der zweiten Düsennadeln bzw. Gasnadeln samt Pilotventil nahe der Düse ergeben sich bei Weiterbildungen der Erfindung, welche vorsehen, dass der Dual-Fuel-Kraftstoffinjektor einen weiteren Steuerraum für die Hubsteuerung der ersten Düsennadel (Flüssigkraftstoff-Düsennadel) aufweist und die Steuerräume für die zweiten Düsennadeln in Bezug auf den Steuerraum für die erste Düsennadel am Injektor düsennäher gebildet sind.

Bei einer solchen Anordnung, bei welcher der Steuerraum für die erste Düsennadel insbesondere in einer düsenferneren Ebene und die Steuerräume für die zweiten Düsennadeln in einer zweiten, düsennäheren Ebene angeordnet sind, das heißt mit Axialversatz zu dem Steuerraum für die erste Düsennadel, kann eine Gaseinheit inklusive zweiter Düsennadeln, zweiten Steuerräumen und Pilotventil bereitgestellt und unter vorteilhaft guter Ausnutzung des Bauraums düsennah montiert werden, wie vorgeschlagen zum Beispiel in einem Ringmanschetten-Gehäuse (welches einen Führungsabschnitt des Düsenkörpers für die erste Düsennadel umgibt), insbesondere als kompakte Einheit (ähnlich einem Trommelmagazin für die zweiten Düsennadeln). Zudem ermöglicht eine solche Weiterbildung des Dual-Fuel-Kraftstoffinjektors die Verwendung kürzerer zweiter Düsennadeln als im Stand der Technik, mit vorteilhaft geringer zu bewegender Masse. Der Ringkanal kann insbesondere bei einer solchen Lösung (in axialer Richtung betrachtet) zwischen den Steuerräumen für die zweiten Düsennadeln und dem Steuerraum für die erste, Flüssigkraftstoff-Düsennadel angeordnet sein.

Besonders robuste, daneben vorteilhaft unaufwändig fertigungsfähige und Bauraum sparende Ausführungsformen des Dual-Fuel-Kraftstoffinjektors ergeben sich mit der Erfindung bei Ausgestaltungen, bei welchen der Dual-Fuel-Kraftstoffinjektor ein mehrteilig gebildetes, insbesondere dreiteilig gebildetes, Düsenkörpergehäuse aufweist. Hierbei kann der Ringkanal auf einfache Weise zwischen einem ersten (separat gefertigten) und einem zweiten (separat gefertigten) Gehäuseteil gebildet werden bzw. sein, z.B. mittels wenigstens einer Ringnut. Weiterhin können die zweiten Düsennadeln in einem - bevorzugt wie vorstehend geschildert ringmanschettenförmigem - dritten (separat gefertigten) Gehäuseteil aufgenommen werden und deren Steuerräume für die zweiten Düsennadeln über den zweiten Gehäuseteil, z.B. eine einfach zu fertigende Zwischenplatte mit Bohrungen, mit dem Ringkanal kommunizieren.

Der derart mehrteilig bereitgestellte Düsenkörper kann zur Schaffung einer untrennbaren Einheit außen und/oder innen verspannt werden.

Bevorzugt und wiederum vorteilhaft äußerst unaufwändig herstellbar weist der Dual-Fuel-Kraftstoffinjektor einen zweiten Ringkanal (für Brenngas) auf, an welchen Düsenräume der zweiten Düsennadeln - für deren Versorgung mit gasförmigem Kraftstoff - je kommunizierend angebunden sind. Insbesondere bei einer Lösung, welche die Bereitstellung eines dritten Gehäuseteils als Ringmanschette vorsieht, kann der zweite Ringkanal ausgehend von einer zentralen Öffnung der Ringmanschette auf einfache Weise in das Gehäuse des Düsenkörpers bzw. den dritten Gehäuseteil gearbeitet werden, insbesondere wiederum als Ringnut. Vorgeschlagen wird mit der Erfindung auch eine Kraftstoffeinspritzeinrichtung mit wenigstens einem wie vorstehend erläuterten Dual-Fuel-Kraftstoffinjektor.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnungen näher erläutert. Es zeigen:
- Fig. 1: exemplarisch und schematisch, insbesondere stark vereinfacht, einen - an Gas- und Flüssigkraftstoffversorgungseinrichtungen angeschlossenen - Dual-Fuel-Kraftstoffinjektor gemäß einer möglichen Ausführungsform der Erfindung.
- Fig. 2: exemplarisch und schematisch eine Schnittansicht des Düsenkörpers (mit weiteren Komponenten) eines Dual-Fuel-Kraftstoffinjektors gemäß einer bevorzugten Ausführungsform der Erfindung.
- Fig. 3: exemplarisch und schematisch eine durchscheinende Schnittansicht des Düsenkörpers gemäß Fig. 2.
- Fig. 4: exemplarisch und schematisch eine durchscheinende Ansicht des ersten Gehäuseteils des Düsenkörpers gem. Fig. 2 und Fig. 3.
- Fig. 5: exemplarisch und schematisch eine durchscheinende Draufsicht auf den ersten Gehäuseteil gem. Fig. 4.
- Fig. 6: exemplarisch und schematisch eine Schnittansicht des zweiten und dritten Gehäuseteils des Düsenkörpers gemäß Figs. 2 und 3.
- Fig. 7: exemplarisch und schematisch eine weitere Ansicht des zweiten und dritten Gehäuseteils gemäß Fig. 6.

In der nachfolgenden Beschreibung und den Zeichnungen entsprechen gleichen Bezugszeichen Elemente gleicher oder vergleichbarer Funktion.

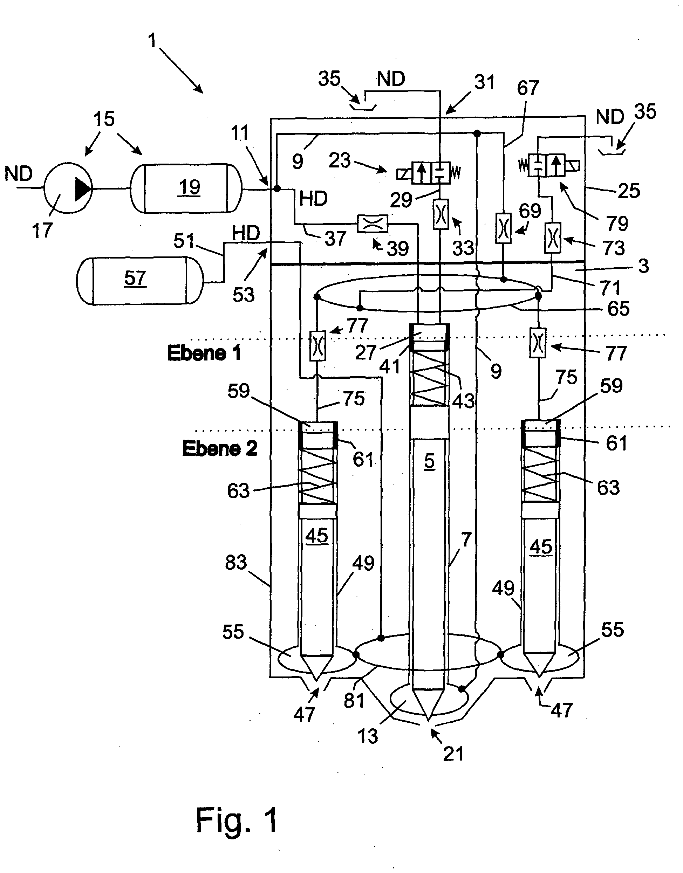

**Fig. 1** zeigt exemplarisch einen erfindungsgemäßen Dual-Fuel-Kraftstoffinjektor (Zweistoffdüse bzw. Zweistoff-Injektor) 1 für ein Dual-Fuel-Kraftstoffeinspritzsystem, insbesondere ein Gas-Common-Rail-System, bzw. für eine Brennkraftmaschine (nicht dargestellt), insbesondere einen Gas-/ Dieselmotor. Der Dual-Fuel-Kraftstoffinjektor 1 ist für einen Einspritzbetrieb sowohl mit einem ersten, flüssigen Kraftstoff (insbesondere Dieselkraftstoff, Bio- oder Schweröl) als auch einem zweiten, gasförmigen Kraftstoff (Brenngas) bereitgestellt und weist einen Düsenkörper 3 (Düsenelement) auf.

In dem Düsenkörper 3 ist eine erste axial hubsteuerbare Düsennadel 5 aufgenommen, d.h. in einer Axialbohrung 7 des Düsenkörpers 3. Die erste Düsennadel 5 ist für Einspritzvorgänge mit Flüssigkraftstoff bereitgestellt. Für den Betrieb mit Flüssigkraftstoff weist der Dual-Fuel-Kraftstoffinjektor 1 weiterhin eine Hochdruckleitung 9 auf, welche von einem Flüssigkraftstoffeinlass 11 am Dual-Fuel-Injektor 1 zu einem Flüssigkraftstoff-Düsenraum 13 im Düsenkörper 3 führt.

Zur Versorgung des Kraftstoffinjektors 1 mit Flüssigkraftstoff kann im Rahmen einer Kraftstoffeinspritzeinrichtung eine Hochdruck (HD) -Versorgungsvorrichtung 15 vorgesehen sein, zum Beispiel gebildet mittels einer Hochdruckpumpe 17 und einem Rail 19 und/oder Einzeldruckspeicher, über welche Hochdruck-Versorgungsvorrichtung 15 aus einem Tank entnommener Flüssigkraftstoff an den Flüssigkraftstoffeinlass 11 zuförderbar ist.

Der Dual-Fuel-Kraftstoffinjektor 1 ist weiterhin eingerichtet, in den Düsenraum 13 eingebrachten hochdruckbeaufschlagten Flüssigkraftstoff in Abhängigkeit der (Hub-)Stellung der ersten Düsennadel 5 über eine erste Düsenanordnung 21 des Dual-Fuel-Kraftstoffinjektors 1 abzugeben, bei einem Einspritzbetrieb (zum Beispiel reiner Flüssigkraftstoffbetrieb oder Zündstrahlbetrieb) insbesondere in einen Brennraum einer Brennkraftmaschine einzuspritzen.

Der Dual-Fuel-Kraftstoffinjektor 1 ist - wie dargestellt - für das Einspritzen des Flüssigkraftstoffs bevorzugt als indirekt betätigter Injektor 1 ausgebildet, insbesondere mit einem Pilotventil (Steuerventil) 23, welches bevorzugt von einer Magnetaktuatorik (oder z.B. Piezoaktuatorik) beherrscht wird. Alternativ kann vorgesehen sein, den Dual-Fuel-Kraftstoffinjektor 1 für das Einspritzen des Flüssigkraftstoffs als direkt betätigten Injektor 1 auszugestalten, wobei die Aktuatorik insbesondere direkt auf die Düsennadel 5 wirkt.

Über das bevorzugt samt seiner Aktuatorik in einem Injektorgehäuse 25 aufgenommene Pilotventil 23 kann ein Steuerraum 27 des Kraftstoffinjektors 1 für die erste Düsennadel 5 ventilstellungsabhängig entlastet werden, insbesondere über einen Leckageströmungsweg 29 des injektorinternen Kraftstoffsystems. Der Leckageströmungszweig 29 führt ausgehend vom Steuerraum 27 zu einem niederdruckseitigen (ND) Leckageauslass 31 des Injektors 1, d.h. über das Pilotventil 23 (unter Drosselung 33), z.B. zu einem Leckagesammelbehältnis 35 (Tank).

In den Steuerraum 27 für die erste Düsennadel 5 mündet weiterhin ein Hochdruckpfad 37 des injektorinternen Kraftstoffsystems (mit Drosselung 39), über welchen der Steuerraum 27 - via hochdruckbeaufschlagten Flüssigkraftstoff - ausgehend von der Hochdruckleitung (Hochdruckkanal) 9 belastbar ist. Der Steuerraum 27 kann mittels einer Nadelführungshülse 41 definiert sein, welche am düsenfernen Ende der Axialbohrung 7 in derselben aufgenommen ist, wobei in der Axialbohrung 7 weiterhin eine Schließfeder 43 angeordnet sein kann, welche die Düsennadel 5 in Schließstellung drängt, i.e. gegen einen Ventilsitz bzw. Düsennadelsitz benachbart zu der Düsenanordnung 21.

Um für einen Flüssigkraftstoff Einspritzbetrieb Flüssigkraftstoff über die erste Düsenanordnung 21 auszubringen, i.e. seitens des Düsenraums 13, kann das (Schließ-)Kräftegleichgewicht an der Düsennadel 5 durch Entlastung des Steuerraums 27 via das Pilotventil 23 aufgelöst werden (Leckageströmungsweg 29 geöffnet), so dass die Düsennadel 5 von dem Ventilsitz abheben und den Strömungsweg zu den Spritzlöchern der Düsenanordnung 21 freigeben kann. Für ein Schließen des Düsenventils wird das Pilotventil 23 in Sperrstellung geschaltet (s. Fig. 1), woraufhin sich der Druck im Steuerraum 27 über den Hochdruckpfad 9, 37 wieder aufbaut und die Düsennadel 5 schließfederkraftunterstützt in den Nadelsitz zurückkehrt.

Als Steuerfluid zur Belastung und Entlastung des Steuerraums 27 dient somit erkennbar der Flüssigkraftstoff.

Wie in Fig. 1 veranschaulicht, weist der Dual-Fuel-Kraftstoffinjektor 1 weiterhin eine Mehrzahl von um die erste Düsennadel 5 herum angeordneten, axial hubsteuerbaren zweiten Düsennadeln 45 für das Ausbringen von gasförmigem Kraftstoff über eine zweite Düsenanordnung 47 des Dual-Fuel-Kraftstoffinjektors 1 auf (Gas(düsen)nadeln). Die um die erste Düsennadel 5 herum angeordneten zweiten Düsennadeln 45, z.B. vier zweite Düsennadeln 45, sind analog zu der ersten Düsennadel 5 je in einer Axialbohrung 49 des Düsenkörpers 3 aufgenommen, insbesondere in einer konzentrischen Anordnung um die erste Düsennadel 5 angeordnet, so dass sich eine vorteilhaft gute 360°-Abdeckung bei Gas-Einspritzvorgängen im Brennraum erzielen lässt.

Für den Betrieb mit gasförmigem Kraftstoff, zum Beispiel Erdgas, Biogas, etc., weist der Dual-Fuel-Kraftstoffinjektor 1 weiterhin eine Gas-Hochdruckleitung 51 auf, welche von einem Brenngaseinlass 53 am Dual-Fuel-Injektor 1 zu einem jeweiligen Gas-Düsenraum 55 der zweiten Düsennadeln 45 führt. Ein Strömungsweg von dem jeweiligen Gas-Düsenraum 55 zu wenigstens einem Gas-Spritzloch der zweiten Gasdüsenanordnung 47 ist hierbei über die jeweilige zweite Düsennadel 45 selektiv absperrbar.

Zur Versorgung des Kraftstoffinjektors 1 mit gasförmigem Kraftstoff (an die Düsenräume 55) kann - wiederum im Rahmen einer Kraftstoffeinspritzeinrichtung - eine Gas-Hochdruck-Versorgungsvorrichtung 57 vorgesehen sein, zum Beispiel gebildet mittels eines Brenngasvorrats (Tank) und eines Verdichters oder einer Flüssiggasversorgung mit Hochdruckpumpe und Verdampfer, weiterhin z.B. einem Rail, etc., über welche Hochdruck-Versorgungsvorrichtung 57 der gasförmige Kraftstoff, zum Beispiel Erdgas, an den Brenngaseinlass 53 zuförderbar ist.

Der Dual-Fuel-Kraftstoffinjektor 1 ist für den Gasbetrieb analog dem vorstehend für die erste Düsennadel 5 bzw. den Flüssigkraftstoffbetrieb geschilderten Wirkprinzip für eine indirekte Steuerung der zweiten Düsennadeln 45 eingerichtet. In die Gasdüsenraume 55 eingebrachtes hochdruckbeaufschlagtes Brenngas kann in Abhängigkeit der (Hub-)Stellung der zweiten Düsennadeln 45 über die zweite Düsenanordnung 47 des Dual-Fuel-Kraftstoffinjektors 1 abgegeben werden, bei einem Einspritzbetrieb (zum Beispiel Zündstrahlbetrieb) insbesondere in den Brennraum einer Brennkraftmaschine eingespritzt werden. Im Hinblick auf die Düsenanordnung 47 können einer jeweiligen zweiten Düsennadel 45 ein oder mehrere über dieselbe selektiv freigebbare Spritzlöcher zugeordnet sein.

Im Rahmen der vorliegenden Erfindung ist, wie auch in Fig. 1 veranschaulicht, für jede der zweiten Düsennadeln 45 zu deren Hubsteuerung am Injektor 1 je ein eigener Steuerraum 59 zur Beaufschlagung mit einem Steuerfluid bereitgestellt. Als Steuerfluid für die indirekte Steuerung der zweiten Düsennnadeln 45 dient - wie vor - der über den Flüssigkraftstoff-Einlass 11 an den Dual-Fuel-Kraftstoffinjektor 1 versorgte Flüssigkraftstoff. Ein jeweiliger Steuerraum 59 für eine zweite Düsennadel 45 kann bevorzugt analog zu dem Steuerraum 27 für die erste Düsennadel 5 je mittels einer Nadelführungshülse 61 definiert sein, welche am düsenfernen Ende der Axialbohrung 49 in derselben aufgenommen ist, wobei in der Axialbohrung 49 weiterhin eine Schließfeder 63 angeordnet sein kann, welche die zweite Düsennadel 45 in Schließstellung drängt, i.e. gegen einen Ventilsitz bzw. Düsennadelsitz an der Düsenanordnung 47.

Erfindungsgemäß weist der Dual-Fuel-Kraftstoffinjektor 1 weiterhin einen Ringkanal 65 auf, welcher via das Steuerfluid (Flüssigkraftstoff) be- und entlastbar ist.

Für seine Belastung ist der Ringkanal 65 über einen Steuerfluid-Zulauf 67 mit der Flüssigkraftstoff-Hochdruckleitung 9 verbunden, wobei in dem Zulaufzweig 67 insbesondere auch eine Zulauf-Drosselvorrichtung 69 angeordnet ist. Für seine Entlastung ist der Ringkanal 65 über einen Steuerfluid-Ablauf 71 selektiv mit der Niederdruckseite (ND) des Kraftstoffinjektors 1 verbindbar, d. h. hin zur Leckageseite. Der Ablaufzweig 71 ist hierbei insbesondere über eine Ablaufdrosselvorrichtung 73 geführt.

Erfindungsgemäß ist der Dual-Fuel-Kraftstoffinjektor 1 weiterhin eingerichtet, die Steuerräume 59 für die zweiten Düsennadeln 45 für die Hubsteuerung der zweiten Düsennadeln 45 über den bzw. ausgehend von dem Ringkanal 65 mit dem Steuerfluid (via das Steuerfluid) zu belasten und zu entlasten bzw. zu beaufschlagen. Hierzu sind, wie in Fig. 1 veranschaulicht, die Steuerräume 59, insbesondere sämtliche Steuerräume 59, für die zweiten Düsennadeln 45 je kommunizierend an den Ringkanal 65 angebunden. Zur kommunizierenden Anbindung eines jeweiligen Steuerraumes 59 für eine zweite Düsennadel 45 an den Ringkanal 65 braucht mit der Erfindung vorteilhaft je nur ein (einziger) Stichkanal 75 vorgesehen werden. Die Kommunikationsverbindung ist hierbei insbesondere über eine Drosselvorrichtung 77 geführt.

Im Rahmen der Beaufschlagung des Ringkanals 65 mit Steuerfluid, bei welcher insbesondere ein vorbestimmtes Steuerfluid-Druckniveau im Ringkanal 65 gestellt wird, werden insoweit auch die kommunizierend angebundenen Steuerräume 59 (der zweiten Düsennadeln 45) mit Steuerfluid beaufschlagt und damit einhergehend ein Steuerdruckniveau in je denselben eingestellt, das heißt mittelbar über den Ringkanal 65. Insoweit stellt der Ringkanal 65 einen (gemeinsamen) Vorsteuerraum für die Steuerräume 59 der zweiten Düsennadeln 45 dar bzw. bildet einen solchen.

Im Rahmen der vorliegenden Erfindung ist der Dual-Fuel-Kraftstoffinjektor 1 hierbei bevorzugt insbesondere eingerichtet, die zweiten Düsennadeln 45 über den Ringkanal 65 und die daran angebundenen Steuerräume 59 weitestgehend simultan und mit gleichem Hubprofil über der Zeit hubzusteuern. Dies wird zum einen ermöglicht durch weitestgehende Verwendung von Gleichteilen an der mit den zweiten Düsennadeln 45 gebildeten Gas-Injektoreinheit, jedoch durch stets verbleibende Toleranzbehaftung erschwert. Aufgrund der Toleranzbehaftung (der Drosselvorrichtungen, der Nadelhülsenspiele (Leckage durch Ringspalt), der Düsennadelfederspannung, des Leitungs- bzw. Steuerraum-Totvolumens, etc.) kann der Gleichgewichtsdruck (bei welchem eine zweite Düsennadel 45 je zu öffnen beginnt) über die zweiten Steuerräume 59 hinweg unterschiedlich sein, so dass die zweiten Düsennadeln 42 zeitversetzt öffnen.

Im Rahmen der Erfindung wurde jedoch erkannt, dass die Toleranzbehaftung dann als unbeachtlich gelten darf, wenn zum zweiten, wie vorgeschlagen, die Querschnitte der einzelnen Drosselvorrichtungen 77 in der Summe sehr viel kleiner gewählt werden, als die Querschnitte der Ablauf-Drosselvorrichtung 73 und der Zulauf-Drosselvorrichtung 69. Zwar stellt sich durch die kleinen Drosselquerschnitte 77 ein sehr langsames Öffnen der zweiten Düsennadeln 45 ein, für die Entflammung des Brenngasstrahls in der vorgelagerten Zündstrahlflamme wirkt sich dies jedoch positiv aus (analog zu einer Lötlampe, welche man bevorzugt auf kleiner Stufe anschaltet und nachfolgend erst weiter aufdreht).

Insoweit als für den Gasbetrieb die Einspritzdynamik des Flüssigkraftstoffbetriebs ferner nicht erforderlich ist (da im Gasbetrieb nur die verhältnismäßig lange Haupteinspritzung eingebracht wird), fallen - wie in der Gesamtschau hervortritt - geringfügig zeitlich versetzte Öffnungszeiten vorteilhaft nicht ins Gewicht (ferner wird daneben erst ab einer bestimmten Teillasthöhe auf Gasbetrieb umgeschaltet, so dass auch eine Kleinstmengenfähigkeit nicht berücksichtigt werden muss).

Um die zweiten Düsennadeln 45 am Einspritzende schneller (als der Öffnungsvorgang dauert) schließen zu können, insbesondere zeitgleich, kann bevorzugt die Anordnung wenigstens einer Triggerplatte in einem jeweiligen Steuerraum 59 für eine zweite Düsennadel 45 vorgesehen werden, z.B. gemäß der Druckschrift DE 10 2012 010 614 A1.

Zur Entlastung des Ringkanals 65 ist - analog zum Flüssigkraftstoffbetrieb - bevorzugt ein weiteres Pilotventil (Steuerventil) 79 am Injektor 1 bereitgestellt, insbesondere ein einziges Pilotventil 79 hierfür. Das Pilotventil 79 ist (samt seiner Aktuatorik) ebenfalls in dem Injektorgehäuse 25 aufgenommen, wobei das Pilotventil 79 - durch die mit der Erfindung verbesserte Bauraumsituation - vorteilhaft auch im Düsenkörper 3 bereitgestellt werden kann (ohne Aktuatorik). Hieraus ergibt sich ein Vorteil dahingehend, kurze zweite Düsennadeln 45 mit geringen bewegten Massen nutzen zu können, insoweit ein verbessertes Ansprechverhalten bei geringerem Aufwand. In Abhängigkeit der Ventilstellung des Pilotventils 79 kann der Ringkanal 65 über den über das Pilotventil 79 geführten Steuerfluid-Ablauf 71 entlastet werden, d.h. zum niederdruckseitigen (ND) Leckageauslass, z.B. zu einem Leckagesammelbehältnis (Tank) 35. Das Pilotventil 79 ist bevorzugt ein 2/2-Wege-Ventil oder z.B. ein 3/2-Wege-Ventil.

Um für einen Brenngas-Einspritzbetrieb Brenngas über die zweite Düsenanordnung 47 ausbringen zu können, i.e. seitens der Gas-Düsenräume 55, kann das (Schließ-)Kräftegleichgewicht an einer jeweiligen zweiten Düsennadel 45 durch Entlastung des Ringkanals 65 und insoweit des kommunizierend angebundenen Steuerraums 59 für die zweite Düsennadel 45 via das Pilotventil 79 aufgelöst werden (Ablauf 71 geöffnet), so dass die jeweilige zweite Düsennadel 45 von einem Ventilsitz abheben und den Strömungsweg zu der Düsenanordnung 47 freigeben kann. Für ein Schließen des Düsenventils wird das Pilotventil 79 in Sperrstellung geschaltet (s. Fig. 1), woraufhin sich der Druck im Ringkanal 65 und insoweit im kommunizierend angebundenen Steuerraum 59 für die zweite Düsennadel 45 über den Hochdruckpfad 9, 67 wieder aufbaut und die jeweilige zweite Düsennadel 45 schließfederkraftunterstützt in den Nadelsitz zurückkehrt.

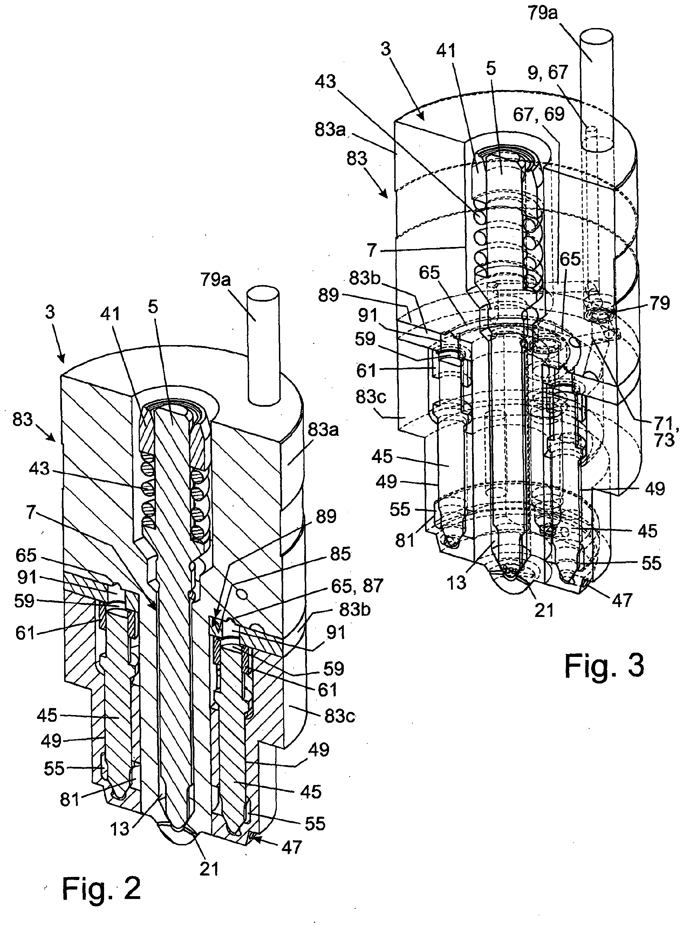

Wie Fig. 1 veranschaulicht, ist der Dual-Fuel-Kraftstoffinjektor 1 bevorzugt weiterhin vorteilhaft baulich unaufwändig dahingehend ausgestaltet, dass auch die Gas-Düsenräume 55 an einen (weiteren) Ringkanal 81 im Dual-Fuel-Kraftstoffinjektor 1 kommunizierend angebunden sind, wobei die Gas-Düsenräume 55 über den weiteren Ringkanal 81 sämtlich mit dem auszubringenden Brenngas ausgehend von der Brenngas-Versorgungsleitung 51 versorgt werden. Anhand der **Figs. 2** bis **7** wird eine bevorzugte Ausgestaltung des Dual-Fuel-Kraftstoffinjektors noch näher erläutert.

**Fig. 2** zeigt den Düsenkörper 3 des Dual-Fuel-Kraftstoffinjektors 1 (mit darin aufgenommenen Komponenten, z.B. einem Stellglied 79a des zweiten Pilotventils 79) in einer Schnittansicht. Der Düsenkörper 3 weist ein mehrteilig gebildetes Gehäuse 83 auf, wobei ein erster 83a von drei Gehäuseteilen die Flüssigkraftstoff-Düsennadel 5 sowie deren Nadelführungshülse 41 und deren Düsenfeder 43 aufnimmt. Am düsennahen Ende des ersten Gehäuseteils 83a ist die erste Düsenanordnung 21 für das Ausbringen von Flüssigkraftstoff gebildet, das heißt mittels mehrerer Spritzlöcher. Am düsenfernen Ende des ersten Gehäuseteils 83a kann mittels der Nadelführungshülse 41 der Steuerraum 27 für die erste Düsennadel 5 bereitgestellt werden, i.e. in einer ersten düsenfernen Ebene, siehe auch Fig. 1 (Ebene 1).

Der erste Gehäuseteil 83a des Düsenkörpers 3 weist unter Bildung einer Stufe(nfläche) 85 einen im Querschnitt verjüngten Abschnitt (gleichbleibenden Außenquerschnitts) auf, welcher sich von einem Längsmittenbereich des ersten Gehäuseteils 83a bis zur Düsenanordnung 21 hin erstreckt. In die Stufenfläche 85 ist zur - vorteilhaft einfachen - Bereitstellung des Ringkanals 65 eine Ringnut 87 gearbeitet.

**Fig. 3****,** welche der Ansicht von Fig. 2 in transparenter Darstellung entspricht, veranschaulicht die Ringnut 87 an der Stufenfläche 85 mit darin einzweigendem Steuerfluid-Zulauf 67 und davon abzweigendem Steuerfluid-Ablauf 71, wobei Zulauf 67 und Ablauf 71 je mittels einer Drosselbohrung 69 bzw. 73 ausgeführt sind. Auch in Bezug auf die Herstellung der Strömungsverbindungen 69, 73 zum Ringkanal 65 ermöglicht die Ausgestaltung mit Stufenfläche 85 ersichtlich eine vorteilhaft gute Zugänglichkeit hierfür seitens derselben.

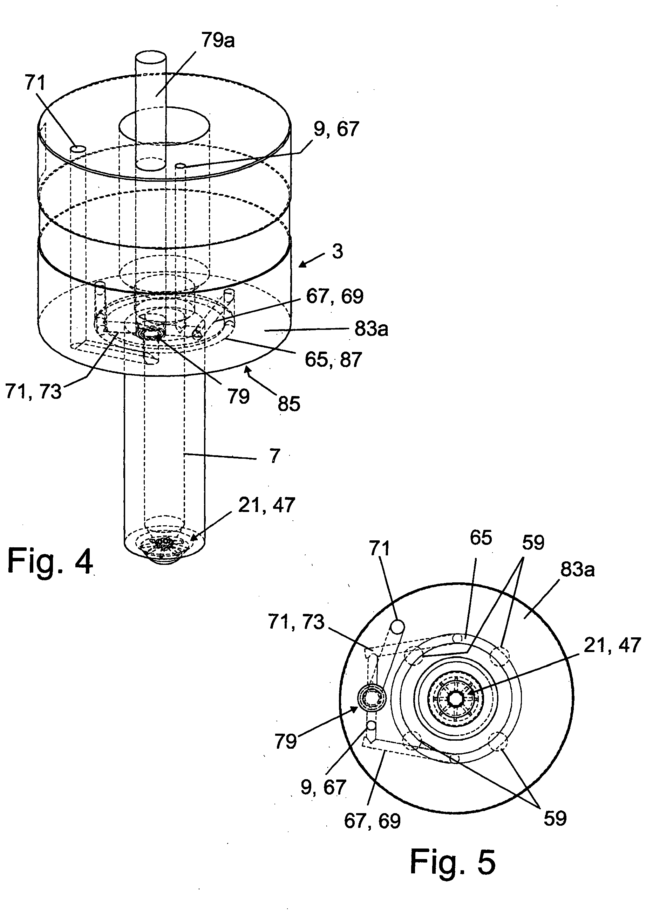

**Fig. 4** und **Fig. 5** veranschaulichen den ersten Gehäuseteil 83a mit insbesondere den darin gebildeten Strömungswegen in je einer durchscheinenden Ansicht hierbei noch näher.

Mit Bezug nun wieder auf Fig. 2 und Fig. 3 weist das Düsenkörpergehäuse 83 einen zweiten Gehäuseteil 83b auf. Der zweite Gehäuseteil 83b ist als Zwischenplatte bereitgestellt und umgibt in Anlage an der Stufenfläche 85 den verjüngten Abschnitt ringförmig. Der zweite Gehäuseteil 83b weist weiterhin Durchgänge (Bohrungen) 91 auf, welche der kommunizierenden Anbindung der Steuerräume 59 der zweiten Düsennadeln 45 an den Ringkanal 65 dienen. Die Durchgänge 91 können je eine Drosselvorrichtung 77 ausbilden, alternativ oder zusätzlich kann der Ringkanal 65 die Drosselvorrichtung 77 bereitstellen.

Gegen den zweiten Gehäuseteil 83b ist bei dem veranschaulichten mehrteiligen Düsenkörpergehäuse 83 ein dritter Gehäuseteil 83c gedrängt, welcher die zweiten Düsennadeln 45 sowie deren Nadelführungshülsen 61 und deren Düsenfedern 63 (nicht dargestellt) aufnimmt.

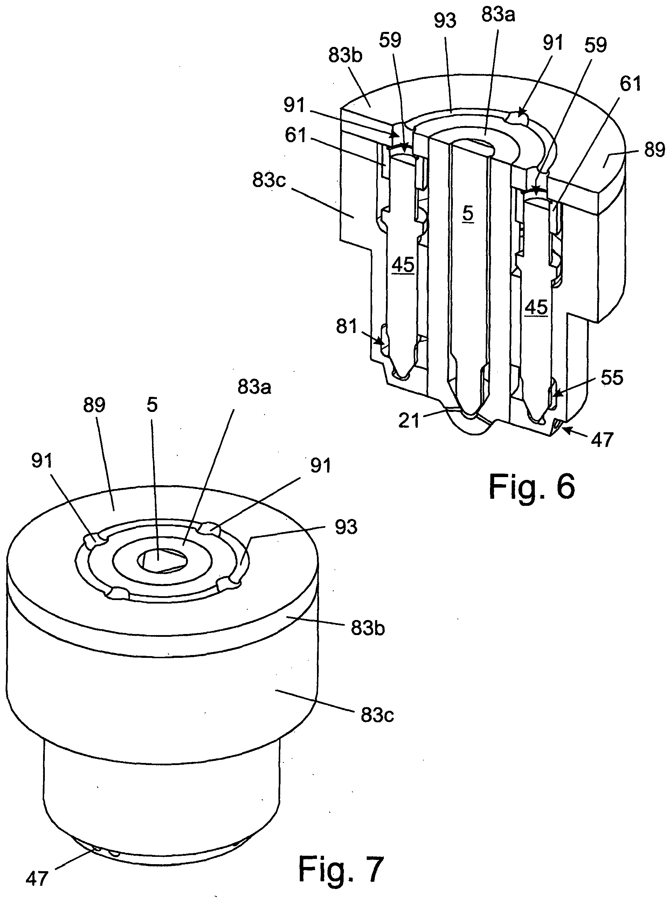

**Fig. 6** und **Fig. 7** veranschaulichen diese Anordnung - neben Fig. 2 und Fig. 3 - näher, insbesondere auch die Durchgänge (Kommunikationsverbindungen) 91 der Steuerräume 59 für die zweiten Düsennadeln 45 mit dem Ringkanal 65 an dem zweiten Gehäuseteil 83b.

Wie Fig. 6 und 7 weiterhin zeigen, kann auch an der zur Anlage an der Stufenfläche 85 gebrachten Stirnfläche 89 des zweiten Gehäuseteils 83b eine zu der Ringnut 87 an der Stufenfläche 85 komplementäre Ringnut 93 in die Zwischenplatte 83b eingebracht sein, mittels welcher und der Ringnut 87 der Stufenfläche 85 der Ringkanal 65 gebildet werden kann. Alternativ kann auch lediglich eine einzige Ringnut 87 für die Bildung des Ringkanals 65 vorgesehen sein, i.e. in dem Gehäuseteil 83a oder 83b. Bevorzugt ist der Ringkanal 65 allgemein, wie dargestellt, zwischen zwei Gehäuseteilen (83a, 83b) gebildet.

Der dritte Gehäuseteil 83c ist als Ringmanschette (trommelmagazingleich die zweiten Düsennadeln 45 aufnehmend) bereitgestellt und am Düsenkörper 3 ebenfalls um den verjüngten Abschnitt des ersten Gehäuseteils 83a herum angeordnet, hierbei mit einer düsenfernen Stirnfläche gegen den zweiten Gehäuseteil 83b zur Anlage gebracht.

In Anlage an dem zweiten Gehäuseteil 83b ermöglichen die Durchgänge 91 in dem zweiten Gehäuseteil 83b die Kommunikation der Steuerräume 59 mit dem Ringkanal 65, wobei sich die mittels den Nadelführungshülsen 61 und dem zweiten Gehäuseteil 83b gebildeten Steuerräume 59 der zweiten Düsennadeln 45 korrespondierend am düsenfernen Ende des dritten Gehäuseteils 83c befinden, i.e. in einer in Bezug zu der ersten Ebene düsennäheren zweiten Ebene, siehe auch Fig. 1 (Ebene 2). Am düsennahen Ende des dritten Gehäuseteils 83c ist die zweite Düsenanordnung 47 für das Ausbringen von Brenngas gebildet, d.h. mittels mehrerer Spritzlöcher.

Bei dieser Ausgestaltung des Dual-Fuel-Kraftstoffinjektors 1 ist der Ringkanal 65 insoweit zwischen der ersten Ebene (des ersten Steuerraums 27) und der zweiten Ebene (der zweiten Steuerräume 59) bereitgestellt.

Der Dual-Fuel-Kraftstoffinjektor 1 weist, siehe zum Beispiel Fig. 2 oder Fig. 6, ebenfalls einen zweiten Ringkanal 81 auf, an welchen Düsenräume 55 (Ringräume an den Gas-Düsennadelspitzen) der zweiten Düsennadeln 45 - für deren Versorgung mit gasförmigem Kraftstoff - je kommunizierend angebunden sind. Baulich vorteilhaft unaufwändig ist der zweite Ringkanal 81 ausgehend von der zentralen Öffnung des dritten Gehäuseteils (Ringmanschette) 83c auf einfache Weise in das Gehäuse 83 des Düsenkörpers 3 bzw. den dritten Gehäuseteil 83c gearbeitet, insbesondere wiederum als Ringnut. Die Anbindung an die Hochdruckleitung 51 kann vorteilhaft über eine einzige Stichleitung erfolgen.

## Patentansprüche

1. Dual-Fuel-Kraftstoffinjektor (1), aufweisend:
- eine erste axial hubsteuerbare Düsennadel (5) für das Ausbringen von Flüssigkraftstoff über eine erste Düsenanordnung (21) des Dual-Fuel-Kraftstoffinjektors (1);
- eine Mehrzahl von um die erste Düsennadel (5) herum angeordneten, axial hubsteuerbaren zweiten Düsennadeln (45) für das Ausbringen von gasförmigem Kraftstoff über eine zweite Düsenanordnung (47) des Dual-Fuel-Kraftstoffinjektors (1);
- wobei für jede der zweiten Düsennadeln (45) zu deren Hubsteuerung am Injektor (1) je ein via ein Steuerfluid be- und entlastbarer Steuerraum (59) bereitgestellt ist;
**dadurch gekennzeichnet, dass**
- der Dual-Fuel-Kraftstoffinjektor (1) weiterhin einen via das Steuerfluid be- und entlastbaren Ringkanal (65) aufweist;
- der Dual-Fuel-Kraftstoffinjektor (1) eingerichtet ist, die Steuerräume (59) für die zweiten Düsennadeln (45) für die Steuerung des Hubs der zweiten Düsennadeln (45) ausgehend von dem Ringkanal (65) via das Steuerfluid zu belasten und zu entlasten.

2. Dual-Fuel-Kraftstoffinjektor (1) nach Anspruch 1,
**dadurch gekennzeichnet, dass**
- der Dual-Fuel-Kraftstoffinjektor (1) eingerichtet ist, zur Hubsteuerung der zweiten Düsennadeln (45) ein vorbestimmtes Steuerfluid-Druckniveau im Ringkanal (65) einzustellen.

3. Dual-Fuel-Kraftstoffinjektor (1) nach einem der vorhergehenden Ansprüche,
**dadurch gekennzeichnet, dass**
- der Ringkanal (65) einen Steuerfluid-Zulauf (67) und einen Steuerfluid-Ablauf (71) aufweist; und
- der Steuerfluid-Zulauf (67) und/oder der Steuerfluid-Ablauf (71) selektiv offensteuerbar ist; und
- die Steuerräume (59) für die zweiten Düsennadeln (45) je kommunizierend an den Ringkanal (65) angebunden sind.

4. Dual-Fuel-Kraftstoffinjektor (1) nach einem der vorhergehenden Ansprüche,
**dadurch gekennzeichnet, dass**
- der Ringkanal (65) einen Steuerfluid-Zulauf (67) und einen Steuerfluid-Ablauf (71) aufweist, in welchen je eine Drosselvorrichtung (69, 73) angeordnet ist;
- die Steuerräume (59) für die zweiten Düsennadeln (45) je über eine Drosselvorrichtung (77) an den Ringkanal (65) kommunizierend angebunden sind;
- die Summe der Drossel-Querschnitte der Drosselvorrichtungen (77), über welche die Steuerräume (59) für die zweiten Düsennadeln (45) an den Ringkanal (65) angebunden sind, kleiner ist als die Drossel-Querschnitte im Zulauf (67) und/oder Ablauf (77) des Ringkanals.

5. Dual-Fuel-Kraftstoffinjektor (1) nach einem der vorhergehenden Ansprüche,
**dadurch gekennzeichnet, dass**
- der Dual-Fuel-Kraftstoffinjektor (1) eingerichtet ist, die zweiten Düsennadeln (45) über den Ringkanal (65) und die daran angebundenen Steuerräume (59) simultan und/oder mit gleichem Hubprofil über der Zeit hubzusteuern.

6. Dual-Fuel-Kraftstoffinjektor (1) nach einem der vorhergehenden Ansprüche,
**dadurch gekennzeichnet, dass**
- der Dual-Fuel-Kraftstoffinjektor (1) einen Steuerraum (27) aufweist, welcher für die erste Düsennadel (5) für deren Hubsteuerung bereitgestellt ist;
- die Steuerräume (59) für die zweiten Düsennadeln (45) in Bezug auf den Steuerraum (27) für die erste Düsennadel (5) am Injektor (1) düsennäher gebildet sind.

7. Dual-Fuel-Kraftstoffinjektor (1) nach Anspruch 6,
**dadurch gekennzeichnet, dass**
- der Ringkanal (65) in axialer Richtung betrachtet zwischen den Steuerräumen (59) für die zweiten Düsennadeln (45) und dem Steuerraum (27) für die erste Düsennadel (5) angeordnet ist.

8. Dual-Fuel-Kraftstoffinjektor (1) nach einem der vorhergehenden Ansprüche,
**dadurch gekennzeichnet, dass**
- der Dual-Fuel-Kraftstoffinjektor (1) ein mehrteilig gebildetes oder dreiteilig gebildetes Düsenkörpergehäuse (83) aufweist;
- der Ringkanal (65) zwischen einem ersten (83a) und einem zweiten (83b) Gehäuseteil gebildet ist; und
- die zweiten Düsennadeln (45) in einem dritten Gehäuseteil (83c) aufgenommen sind, wobei die Steuerräume (59) für die zweiten Düsennadeln (45) über den zweiten Gehäuseteil (83b) mit dem Ringkanal (65) kommunizieren.

9. Dual-Fuel-Kraftstoffinjektor (1) nach einem der vorhergehenden Ansprüche, **dadurch gekennzeichnet, dass**
- der Dual-Fuel-Kraftstoffinjektor (1) einen zweiten Ringkanal (81) aufweist, an welchen Düsenräume (55) der zweiten Düsennadeln (45) je kommunizierend angebunden sind;
- über den zweiten Ringkanal (81) der gasförmige Kraftstoff an die Düsenräume (55) der zweiten Düsennadeln (45) versorgt wird.

10. Dual-Fuel-Kraftstoffinjektor (1) nach einem der vorhergehenden Ansprüche, **dadurch gekennzeichnet, dass**
- der Dual-Fuel-Kraftstoffinjektor (1) eingerichtet ist, die erste (5) und die zweiten (45) Düsennadeln durch Beaufschlagung mit demselben Steuerfluid zu steuern.

11. Kraftstoffeinspritzeinrichtung, **gekennzeichnet durch** wenigstens einen Dual-Fuel-Kraftstoffinjektor (1) nach einem der vorhergehenden Ansprüche.

## Claims

1. Dual-fuel fuel injector (1) having:
- a first nozzle needle (5), the axial stroke of which can be controlled, for the delivery of liquid fuel via a first nozzle arrangement (21) of the dual-fuel fuel injector (1);
- a plurality of second nozzle needles (45), the axial stroke of which can be controlled and which are arranged around the first nozzle needle (5) for the delivery of gaseous fuel via a second nozzle arrangement (47) of the dual-fuel fuel injector (1);
- wherein for each of the second nozzle needles (45), for controlling their stroke, a respective control chamber (59) is provided on the injector (1) which can be charged and relieved via a control fluid;
**characterized in that**
- the dual-fuel fuel injector (1) furthermore has a ring channel (65) which can be charged and relieved via the control fluid;
- the dual-fuel fuel injector (1) is configured to charge and relieve the control chambers (59) for the second nozzle needles (45) via the control fluid, for controlling the stroke of the second nozzle needles (45), starting from the ring channel (65).

2. Dual-fuel fuel injector (1) according to Claim 1, **characterized in that**
- for controlling the stroke of the second nozzle needles (45), the dual-fuel fuel injector (1) is configured to set a predefined control fluid pressure level in the ring channel (65).

3. Dual-fuel fuel injector (1) according to any of the preceding claims, **characterized in that**
- the ring channel (65) has a control fluid inlet (67) and a control fluid outlet (71); and
- the control fluid inlet (67) and/or the control fluid outlet (71) can be opened selectively; and
- the control chambers (59) for the second nozzle needles (45) are each connected communicatively to the ring channel (65).

4. Dual-fuel fuel injector (1) according to any of the preceding claims, **characterized in that**
- the ring channel (65) has a control fluid inlet (67) and a control fluid outlet (71), in each of which a choke device (69, 73) is arranged;
- the control chambers (59) for the second nozzle needles (45) are each connected communicatively to the ring channel (65) via a choke device (77);
- the sum of the choke cross-sections of the choke devices (77), via which the control chambers (59) for the second nozzle needles (45) are connected to the ring channel (65), is smaller than the cross-sections of the chokes in the inlet (67) and/or outlet (77) of the ring channel.

5. Dual-fuel fuel injector (1) according to any of the preceding claims, **characterized in that**
- the dual-fuel fuel injector (1) is configured to control the stroke of the second nozzle needles (45) via the ring channel (65) and the control chambers (59) connected thereto simultaneously and/or with the same stroke profile over time.

6. Dual-fuel fuel injector (1) according to any of the preceding claims, **characterized in that**
- the dual-fuel fuel injector (1) has a control chamber (27) which is provided for controlling the stroke of the first nozzle needle (5);
- the control chambers (59) for the second nozzle needles (45) are formed on the injector (1) closer to the nozzles than the control chamber (27) for the first nozzle needle (5).

7. Dual-fuel fuel injector (1) according to Claim 6, **characterized in that**
- viewed in the axial direction, the ring channel (65) is arranged between the control chambers (59) for the second nozzle needles (45) and the control chamber (27) for the first nozzle needle (5).

8. Dual-fuel fuel injector (1) according to any of the preceding claims, **characterized in that**
- the dual-fuel fuel injector (1) has a multi-piece or three-piece nozzle body housing (83);
- the ring channel (65) is formed between a first (83a) and a second (83b) housing part; and
- the second nozzle needles (45) are accommodated in a third housing part (83c), wherein the control chambers (59) for the second nozzle needles (45) communicate with the ring channel (65) via the second housing part (83b).

9. Dual-fuel fuel injector (1) according to any of the preceding claims, **characterized in that**
- the dual-fuel fuel injector (1) has a second ring channel (81) to which each nozzle chamber (55) of the second nozzle needles (45) is connected communicatively;
- the gaseous fuel is supplied to the nozzle chambers (55) of the second nozzle needles (45) via the second ring channel (81).

10. Dual-fuel fuel injector (1) according to any of the preceding claims, **characterized in that**
- the dual-fuel fuel injector (1) is configured to control the first (5) and the second (45) nozzle needles by pressurization with the same control fluid.

11. Fuel injection device, **characterized by** at least one dual-fuel fuel injector (1) according to any of the preceding claims.

## Revendications

1. Injecteur bicarburant (1), comprenant :
- un premier pointeau de buse (5) dont la course peut être commandée axialement, pour distribuer du carburant fluide par le biais d'un premier agencement de buse (21) de l'injecteur bicarburant (1) ;
- une pluralité de deuxièmes pointeaux de buse (45) dont la course peut être commandée axialement, disposés autour du premier pointeau de buse (5), pour distribuer du carburant gazeux par le biais d'un deuxième agencement de buse (47) de l'injecteur bicarburant (1) ;
- un espace de commande pouvant être chargé et déchargé (59) par le biais d'un fluide de commande étant respectivement prévu pour chacun des deuxièmes pointeaux de buse (45) en vue leur commande de course sur l'injecteur (1) ;
**caractérisé en ce que**
- l'injecteur bicarburant (1) présente en outre un canal annulaire (65) pouvant être chargé et déchargé par le biais du fluide de commande ;
- l'injecteur bicarburant (1) est prévu pour charger et décharger, par le biais du fluide de commande, les espaces de commande (59) pour les deuxièmes pointeaux de buse (45) pour la commande de la course des deuxièmes pointeaux de buse (45) à partir du canal annulaire (65).

2. Injecteur bicarburant (1) selon la revendication 1,
**caractérisé en ce que**
- l'injecteur bicarburant (1) est prévu pour ajuster un niveau de pression de fluide de commande prédéterminé dans le canal annulaire (65) pour la commande de course des deuxièmes pointeaux de buse (45).

3. Injecteur bicarburant (1) selon l'une quelconque des revendications précédentes,
**caractérisé en ce que**
- le canal annulaire (65) présente une entrée de fluide de commande (67) et une sortie de fluide de commande (71) ; et
- l'entrée de fluide de commande (67) et/ou la sortie de fluide de commande (71) peuvent être commandées sélectivement à l'ouverture ; et
- les espaces de commande (59) pour les deuxièmes pointeaux de buse (45) sont à chaque fois reliés de manière à communiquer avec le canal annulaire (65).

4. Injecteur bicarburant (1) selon l'une quelconque des revendications précédentes,
**caractérisé en ce que**
- le canal annulaire (65) présente une entrée de fluide de commande (67) et une sortie de fluide de commande (71), dans lesquelles est à chaque fois disposé un dispositif d'étranglement (69, 73) ;
- les espaces de commande (59) pour les deuxièmes pointeaux de buse (45) sont à chaque fois reliés de manière à communiquer avec le canal annulaire (65) par le biais d'un dispositif d'étranglement (77) ;
- la somme des sections transversales d'étranglement des dispositifs d'étranglement (77), par le biais desquels les espaces de commande (59) pour les deuxièmes pointeaux de buse (45) sont raccordés au canal annulaire (65), est inférieure aux sections transversales d'étranglement dans l'entrée (67) et/ou la sortie (77) du canal annulaire.

5. Injecteur bicarburant (1) selon l'une quelconque des revendications précédentes,
**caractérisé en ce que**
- l'injecteur bicarburant (1) est prévu pour commander la course des deuxièmes pointeaux de buse (45) simultanément et/ou avec le même profil de course en fonction du temps par le biais du canal annulaire (65) et des espaces de commande (59) reliés à celui-ci.

6. Injecteur bicarburant (1) selon l'une quelconque des revendications précédentes,
**caractérisé en ce que**
- l'injecteur bicarburant (1) présente un espace de commande (27) qui est fourni pour le premier pointeau de buse (5) en vue de sa commande de course ;
- les espaces de commande (59) pour les deuxièmes pointeaux de buse (45) sont formés plus près de la buse par rapport à l'espace de commande (27) pour le premier pointeau de buse (5) sur l'injecteur (1).

7. Injecteur bicarburant (1) selon la revendication 6,
**caractérisé en ce que**
- le canal annulaire (65), vu dans la direction axiale, est disposé entre les espaces de commande (59) pour les deuxièmes pointeaux de buse (45) et l'espace de commande (27) pour le premier pointeau de buse (5).

8. Injecteur bicarburant (1) selon l'une quelconque des revendications précédentes,
**caractérisé en ce que**
- l'injecteur bicarburant (1) présente un boîtier de corps de buse (83) en plusieurs parties ou en trois parties ;
- le canal annulaire (65) est formé entre une première partie de boîtier (83a) et une deuxième partie de boîtier (83b) ; et
- les deuxièmes pointeaux de buse (45) sont reçus dans une troisième partie de boîtier (83c), les espaces de commande (59) pour les deuxièmes pointeaux de buse (45) communiquant avec le canal annulaire (65) par le biais de la deuxième partie de boîtier (83b).

9. Injecteur bicarburant (1) selon l'une quelconque des revendications précédentes,
**caractérisé en ce que**
- l'injecteur bicarburant (1) présente un deuxième canal annulaire (81) au niveau duquel des espaces de buse (55) des deuxièmes pointeaux de buse (45) sont à chaque fois reliés de manière à communiquer ;
- le carburant gazeux est alimenté par le biais du deuxième canal annulaire (81) aux espaces de buse (55) des deuxièmes pointeaux de buse (45).

10. Injecteur bicarburant (1) selon l'une quelconque des revendications précédentes,
**caractérisé en ce que**
- l'injecteur bicarburant (1) est prévu pour commander le premier (5) et les deuxièmes (45) pointeaux de buse par sollicitation avec le même fluide de commande.

11. Dispositif d'injection de carburant **caractérisé par** au moins un injecteur bicarburant (1) selon l'une quelconque des revendications précédentes.
